# EUROPÄISCHE PATENTANMELDUNG

(11) **EP 1 672 760 A2**
(43) Veröffentlichungstag der Anmeldung: **21.06.2006**
(21) Anmeldenummer: 05027423.2
(22) Anmeldetag: 14.12.2005
(51) Int. Cl.: H02G 3/12

(54) **Dosensetzer**

(30) Priorität: 16.12.2004 AT 91804 U
(71) Anmelder: Schnabl, Ludwig, 3133 Traismauer (AT)
(72) Erfinder: Schnabl, Ludwig, 3133 Traismauer (AT)
(74) Vertreter: Grabherr, Claudia

(57) **Zusammenfassung**

Bei einem Dosensetzer zur Halterung von Dosen, wie Schalterdosen (17), Abzweigdosen, Abzweigkästen (18) oder dergleichen während des Setzens und/oder Befestigens der Dosen (17, 18) in einer Wand umfassend einen vorzugsweise H-förmigen Rahmen (1) mit einer Längsstrebe (4) und zwei Querstreben (5), an welchem die Dosen (17, 18) über eine Fixiervorrichtung (2) fixierbar sind, sowie am Rahmen (1) angeordnete auf unterschiedliche Längen einstellbare Abstandshalter (3), umfasst die Fixiervorrichtung (2) eine fest an der Längsstrebe (4) montierte Dosenhalterung (6) und eine entlang der Längsstrebe (4) verschiebbare Dosenhalterung (7), wodurch die Fixiervorrichtung (2) an unterschiedliche Größen, von ein- oder mehrteiligen Dosen (17, 18) anpassbar ist.

## Beschreibung

Bei der Erfindung handelt es sich um einen Dosensetzer zur Halterung von Dosen während des Setzens und/oder Befestigens der Dosen in einer Wand umfassend einen vorzugsweise H-förmigen Rahmen mit einer Längsstrebe und zwei Querstreben, an welchem die Dosen über eine Fixiervorrichtung fixierbar sind, sowie am Rahmen angeordnete auf unterschiedliche Längen einstellbare Abstandshalter. Mit Dosen sind im folgenden Text alle handelsüblichen ein- oder mehrteiligen Schalterdosen, Abzweigdosen, Abzweigkästen oder dergleichen gemeint.

Dosensetzer zur Halterung von Dosen während des Einbaus sind an sich bekannt. So wird z.B. in der DE 1 024 805 3 A1 ein Dosensetzer zum Einsetzen einzelner Schalterdosen beschrieben. Bei Dosensetzern dieser Art ist das korrekte Einsetzen und Ausrichten der Dose am Dosensetzer jedoch nicht immer einfach und es können immer nur Einzeldosen mit bestimmten Größen verwendet werden.

Eine aus der DE 9 418 631 U1 bekannte Vorrichtung für die Unterputzdosenmontage bietet zwar die Möglichkeit mehrere Dosen nebeneinander einzusetzen, jedoch ist auch hier die korrekte Positionierung der Dosen schwierig und bei Verwendung von bereits vorgefertigten mehrteiligen Schalterdosen ist eine kraftschlüssige Fixierung am Dosensetzer kaum möglich. Auch das Einstellen unterschiedlicher Putzstärken ist bei dieser Ausführungsform zwar möglich, jedoch schwierig.

Ein weiterer Dosensetzer ist aus der DE 8 712 734 bekannt. Bei der dort beschriebenen Vorrichtung handelt es sich wie auch beim erfindungsgemäßen Gegenstand um einen Dosensetzer mit einem H-förmigen Rahmen, einer Klemmvorrichtung für das Fixieren der Schalterdosen und Abstandshalter zum Einstellen unterschiedlicher Putzstärken.

In Kombination mit diesem Gerät werden jedoch in der Praxis nur eigens dafür vorgesehene modulare Schalterdosen verwendet, wobei die Möglichkeit besteht eine bis maximal fünf aneinander gesteckte Dosen gleichzeitig zu setzen. Andere handelsübliche Schalterdosen bzw. Abzweigkästen oder dergleichen können mit diesem Gerät nicht gesetzt werden, darüber hinaus ist es mit diesem Gerät praktisch nicht möglich die verwendeten Dosen auf Putzstärken von 5 mm oder darunter einzustellen, was einerseits bei Altbausanierungen und andererseits bei verspachtelten Wänden notwendig wäre. Grund dafür sind die verwendeten konstruktionsbedingten Aufnahmezapfen, die außer bei der Verwendung von mindestens drei aufeinanderfolgenden Dosen ein bündiges Versetzen bei Putzstärken von 5 mm oder darunter verhindern.

Aufgabe der Erfindung ist es somit einen Dosensetzer zu schaffen, mit dem man handelsübliche Dosen setzen kann, und wobei Putzstärken von 0 mm und darüber einstellbar sind. Eine weitere Aufgabe der Erfindung ist es, dass die verwendeten Dosen einfach und kraftschlüssig am Dosensetzer fixierbar sind, die exakte horizontale und vertikale Verlegung möglich ist, und auch geringe Abstände der zu setzenden Dosen zu Türrahmen oder dergleichen vorgesehen sein können.

Gelöst werden diese Aufgaben dadurch, dass die am eingangs definierten Dosensetzer vorgesehene Fixiervorrichtung eine fest an der Längsstrebe montierte Dosenhalterung und eine entlang der Längsstrebe verschiebbare Dosenhalterung umfasst, wodurch die Fixiervorrichtungen an unterschiedliche Größen von Dosen anpassbar ist. Vorzugsweise sind entlang einer der Querstreben Fixierungselemente vorgesehen, welche eine bessere Fixierung von breiten Dosen erlauben, wobei mindestens ein Fixierungselement auf der Querstrebe fixierbar ist. Die Fixierungselemente können Stifte für den Eingriff in entsprechende Ausnehmungen in breiten Dosen aufweisen, welche beim Setzen von schmalen Dosen im Raum zwischen denselben und der Wandöffnung aufgenommen werden. Als Alternative dazu können die Fixierungselemente Zentrierkegel für den Eingriff innerhalb der Dosen aufweisen, die beim Setzen von schmalen Dosen abnehmbar ausgebildet sein können. Bei schmalen mehrteiligen Dosen können diese auch parallel zur Querstrebe mittels der beiden Dosenhalterungen sowie der Zentrierkegel fixiert werden. Dadurch ist ein Setzen der Dosen z. B. nahe eines Türrahmens bzw. in einer Ecke möglich.

Vorzugsweise beinhaltet jedes verschiebbare Fixierungselement an der Querstrebe mindestens ein Verschiebe- und Verrastelement, welches mit an den Querstreben angeordneten Rastvertiefungen verrastbar ist, wobei Rastvertiefungen für das Einspannen aller gängigen Größen von Dosen und Dosenkombinationen vorgesehen sind.

Zum Einstellen unterschiedlicher Putzstärken sind gemäß einem weiteren Merkmal der Erfindung Abstandhalter vorgesehen. Diese können entweder an den Enden der Querstreben angeordnet sein, oder an den Verschiebe- und Verrastelementen auf jener Querstrebe, die dieselben trägt. Jene Abstandhalter, die an den Verschiebe- und Verrastelementen angeordnet sind, sind mit diesen verschiebbar, wodurch sie auch zum Setzen von Dosen in geringem Abstand zu Türrahmen oder ähnlichem geeignet sind. Der Rahmen kann aber auch asymmetrisch ausgebildet sein, indem mindestens eine Querstrebe sich asymmetrisch zur Längsstrebe in Form eines kurzen und eines langen Schenkels erstreckt. Dabei können an dem kurzen Schenkel der Querstrebe der Abstandhalter und das Fixierungselement fest angeordnet sein und an dem langen Schenkel der Querstrebe der Abstandhalter und das Fixierungselement an dem Verschiebe- und Verrastelement montiert und mit diesem verschiebbar sein. Diese Ausführungsform hat den Vorteil, dass weniger bewegliche Teile benötigt werden und auch durch den kurzen Schenkel nahe an einem Türrahmen oder ähnlichem eine Dose gesetzt werden kann.

Auch die entlang der Längsstrebe des Rahmens verschiebbare Dosenhalterung kann zumindest ein Verschiebe- und Verrastelement beinhalten, welches mit an der Längsstrebe angeordneten Rastvertiefungen verrastbar ist, wobei Rastvertiefungen für das Einspannen aller gängigen Größen von Dosen und Dosenkombinationen vorgesehen sind. Zum noch besseren Halten der Dose kann die verschiebbare Dosenhalterung abnehmbar und am Dosensetzer verrastbar ausgebildet sein, wobei Dosenhalterungen für verschiedene Ausführungen von Dosen vorhanden sind und wechselweise am Dosensetzer aufgesteckt werden können.

Vorteilhafterweise ist die fest an der Längsstrebe montierte und/oder die entlang der Längsstrebe verschiebbare Dosenhalterung mittels eines mit einer Feder vorgespannten Hebels, welcher an einem Hebellagerelement angeordnet ist, bewegbar, wodurch sie fest in der zu montierenden Dose einspannbar ist.

Ferner kann zwischen der fest montierten und der verschiebbaren Dosenhalterung ein variabel einsetzbares mittels einer Kugelraste an der Längsstrebe verrastbares Distanzstück für den Einbau von mehrteiligen Dosen vorgesehen sein, was das Durchbiegen von längeren Dosen verhindert, und höhere Formstabilität derselben sicherstellt.

Um eine kraftschlüssige Verbindung zwischen Dosenhalterung und Dose sicherzustellen, sollen erfindungsgemäß eine oder beide Dosenhalterungen mit Kontaktflächen ausgestattet sein, welche vorzugsweise aus Gummi oder einem anderen Material mit hohem Reibungskoeffizienten bestehen.

Gemäß einer Ausführungsform der Erfindung sind die Abstandshalter kreuz- oder sternförmig ausgebildet und weisen Rastnuten auf, wobei die Abstandhalter an einem Verrastteil drehbar gelagert und mit diesem verrastbar sind. Vorzugsweise ist der Abstandshalter als fünfstrahliger Stern ausgebildet, wobei Abstände für Putzstärken von 0 mm bis 25 mm einzustellen sind. Zur Feineinstellung der Abstände können Einstellschrauben in einem oder mehreren der kreuz- oder sternförmigen Abstandshaltern vorgesehen sein. Damit zusätzliche Abstände einstellbar sind, können die Abstandshalter Ausnehmungen aufweisen, in welche abnehmbare Abstandstücke unterschiedlicher Länge einschiebbar und vorzugsweise mittels einer Raste fixierbar sind.

Der Abstandshalter kann erfindungsgemäß aber auch in Form einer Federklemme mit darin verschiebbarem Stift ausgebildet sein. Diese Stifte weisen ebenfalls vorzugsweise Rastnuten auf, wodurch die unterschiedlichen Abstandshalter bzw. der verschiebbare Stift verrastbar einstellbar sind. In einer weiteren bevorzugten Ausführungsform ist der Abstandhalter aus einem Gewinde und zugehöriger Einstellschraube aufgebaut.

Bevorzugt sind die Verschiebe- und Verrastelemente an der Querstrebe, an der Längsstrebe sowie das Hebelagerelement der Dosenhalterung aus prinzipiell dem gleichen Bauteil aufgebaut, sodass für all diese Elemente nur ein einziges Bauteil z.B. ein Spritzgusselement verwendet werden kann.

Weiters soll der erfindungsgemäße Dosensetzer in an sich bekannter Weise ein oder mehrere Haltegriffe sowie am Rahmen angeordnete Libellen umfassen, wodurch er leicht zu handhaben und horizontal und vertikal an einer Wand ausrichtbar ist. Zur besseren Reinigung kann der Rahmen des Dosensetzers erfindungsgemäß auch zerlegbar ausgeführt sein.

Weitere vorteilhafte Merkmale und Eigenschaften der Erfindung sind der Beschreibung, den Zeichnungen und den Ansprüchen zu entnehmen.

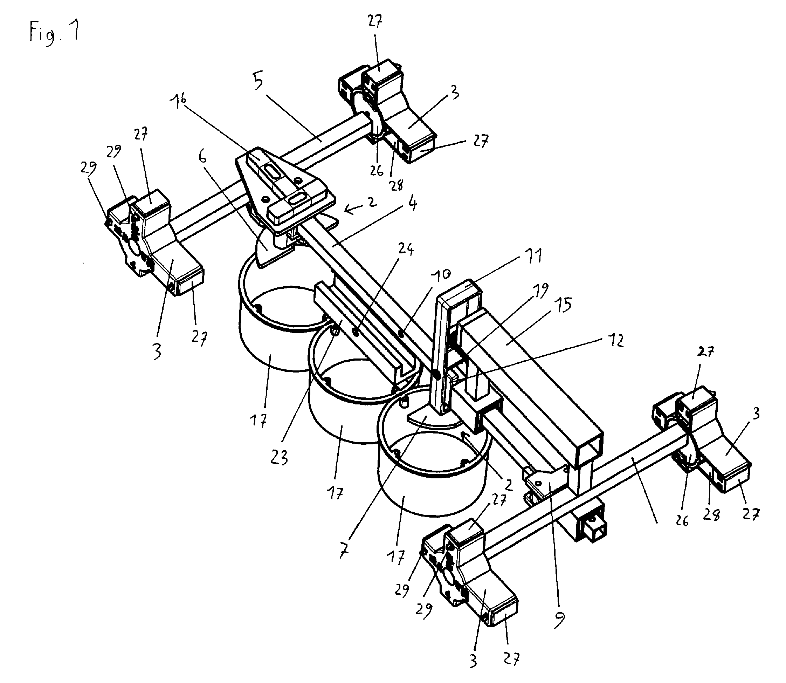

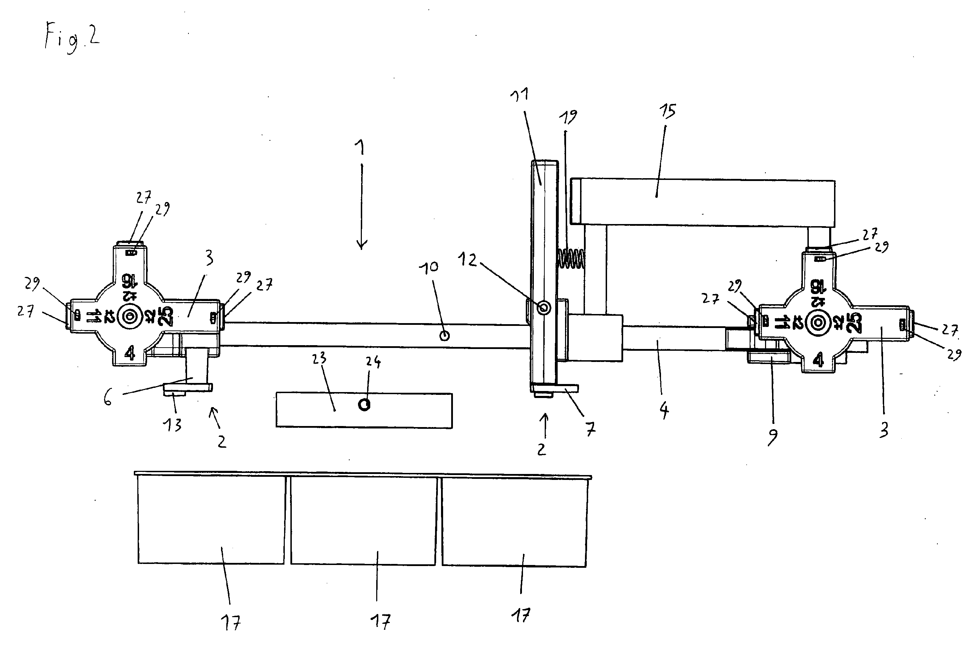

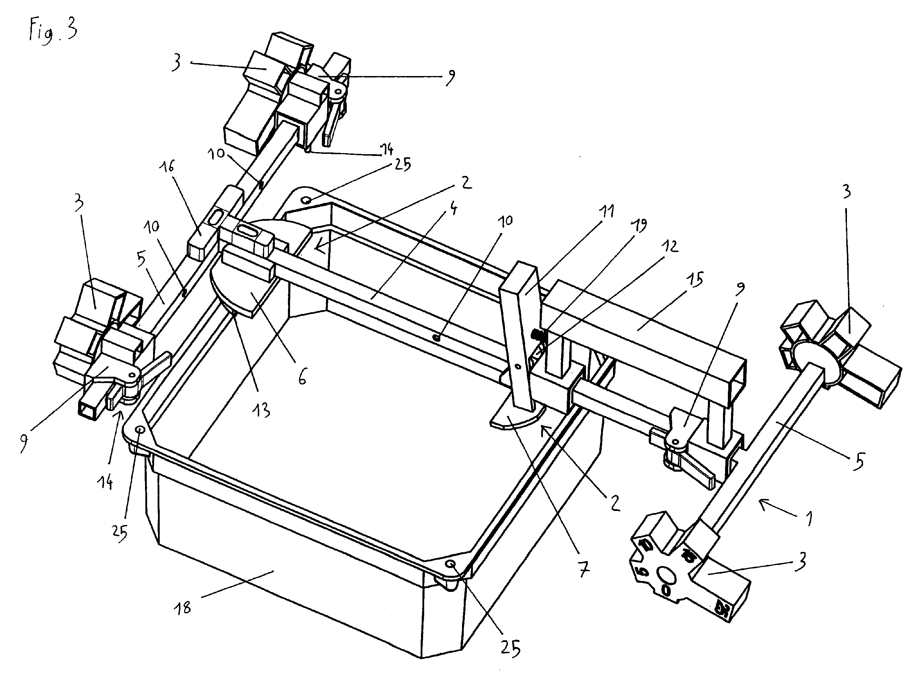

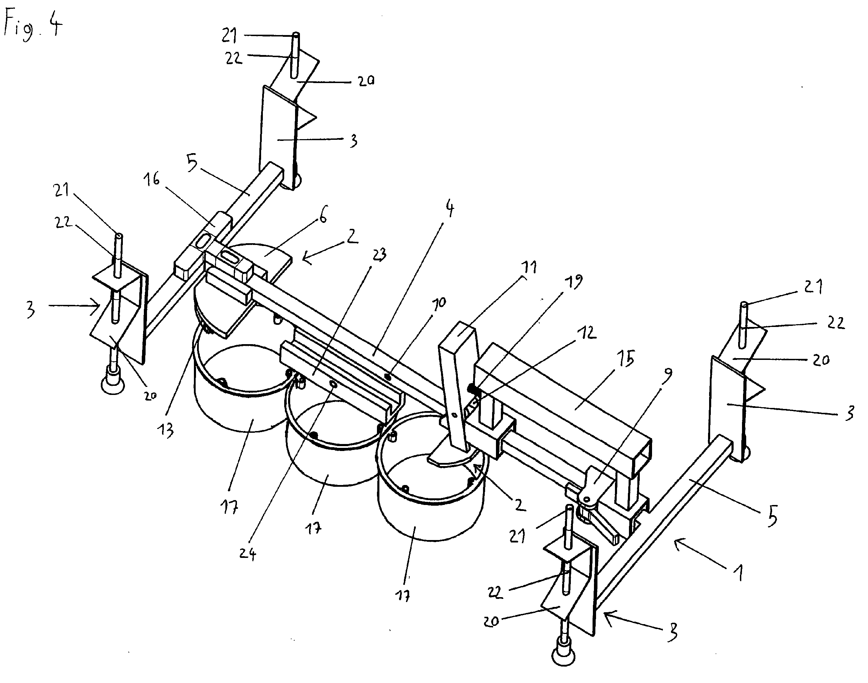

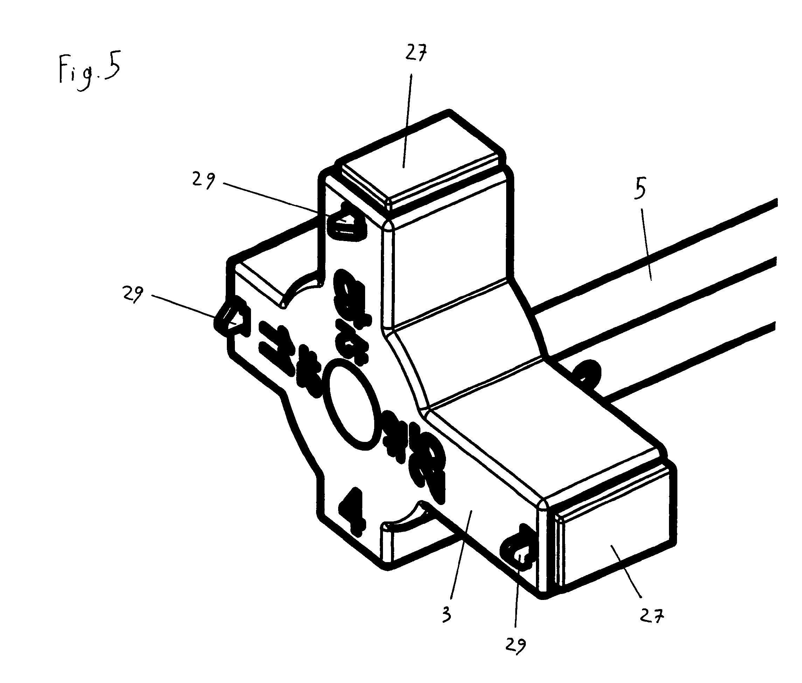

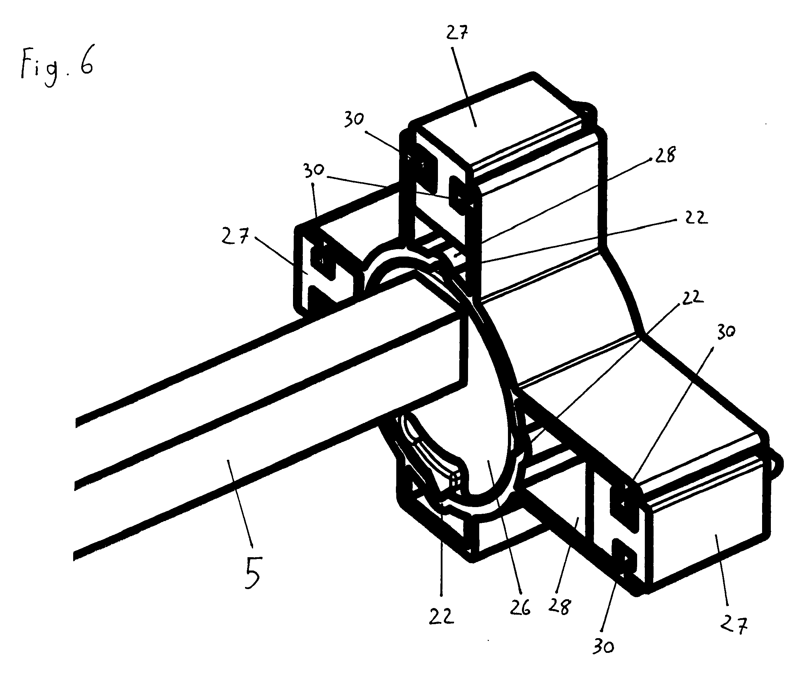

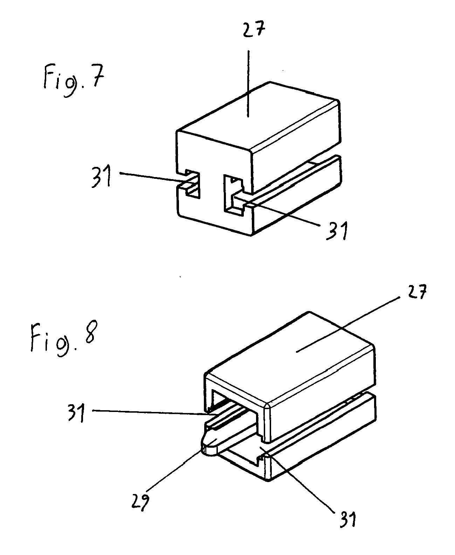

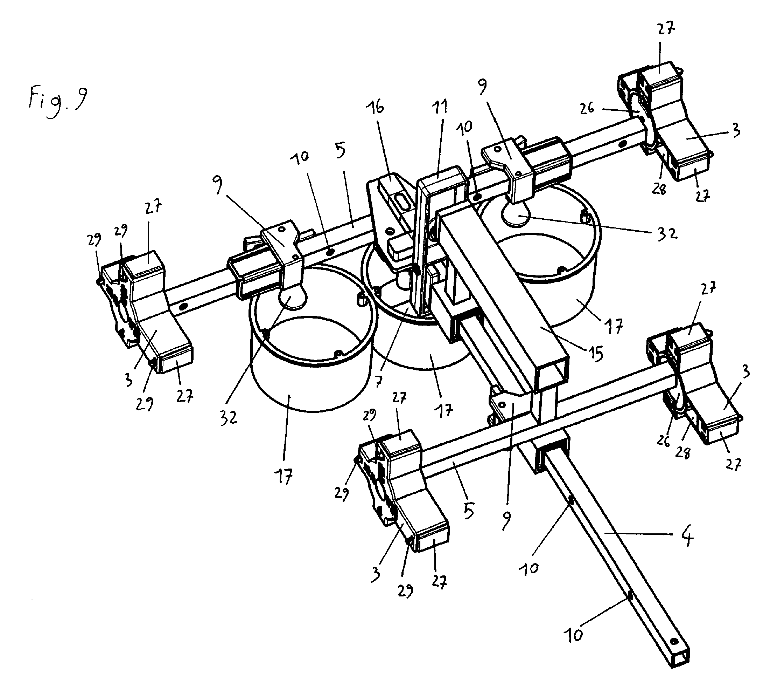

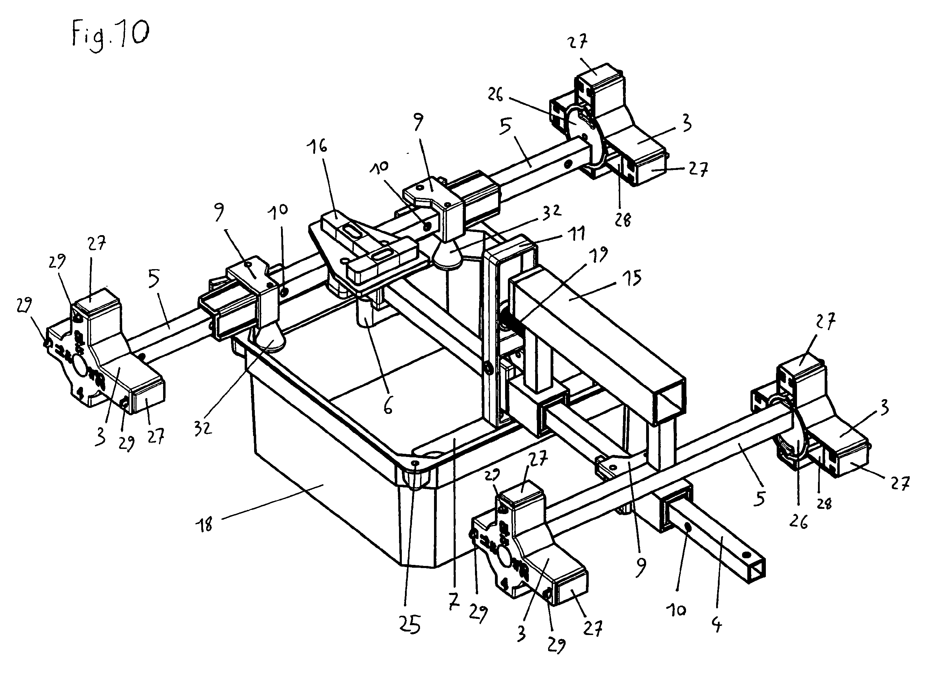

Fig. 1 zeigt eine perspektivische Ansicht einer möglichen Ausführungsform des Dosensetzers mit einer dreifachen Schalterdose. In Fig. 2 ist die Ausführungsform des Dosensetzers aus Fig. 1 in einer Seitenansicht gezeigt. Fig. 3 zeigt eine alternative Ausführungsform des Dosensetzers in einer perspektivischen Ansicht, sowie einen Abzweigkasten. Fig. 4 ist eine perspektivische Ansicht einer weiteren Ausführungsform des Dosensetzers, wobei hier drei Schalterdosen sowie das variabel einsetzbare Distanzstück gezeigt ist. Fig. 5 zeigt eine Detailansicht eines Abstandshalters mit abnehmbaren Abstandstück. Fig. 6 zeigt eine weitere Detailansicht des Abstandshalters aus Fig. 5. Fig. 7 zeigt eine Detailansicht des abnehmbaren Abstandstücks. Fig. 8 zeigt eine weitere Detailansicht des Abstandstücks aus den Fig. 5 bis 7. Fig. 9 zeigt eine perspektivische Ansicht einer weiteren Ausführungsform mit parallel zur Querstrebe angeordneter mehrteiliger Dose. Fig. 10 zeigt eine perspektivische Ansicht der Ausführungsform aus Fig. 9 mit einem daran angeordneten Abzweigkasten.

Der in Fig. 1 gezeigte Dosensetzer besitzt einen H-förmigen Rahmen 1, bestehend aus einer Längsstrebe 4 und zwei Querstreben 5. Angeordnet an der Längsstrebe 4 befindet sich die Fixiervorrichtung 2 für die Schalterdose 17. Die Fixiervorrichtung 2 besteht aus einer festmontierten Dosenhalterung 6 und einer verschiebbaren Dosenhalterung 7. Die verschiebbare Dosenhalterung 7 kann gemeinsam mit dem Haltegriff 15 entlang der Längsstrebe 4 verschoben werden und mittels des Verschiebe- und Verrastelements 9 in den Rastvertiefungen 10 der Längsstrebe 4 verrastet werden. Durch Betätigen des Hebels 11 können die beiden Dosenhalterungen 6, 7 in eine der Schalterdosen 17, oder bei kombinierten Dosen in die jeweiligen Enddosen, eingeführt werden. Durch Loslassen des Hebels 11 spannt die Feder 19 die bewegliche Dosenhalterung 7 nach Außen, wodurch die Schalterdosen 17 sicher festgehalten werden. Zur zusätzlichen Sicherung ist eine Kontaktfläche 13 an der Dosenhalterung 6 montiert, welche aus Gummi oder einem anderen Material mit hohem Reibungskoeffizienten besteht.

Des weiteren ist hier ein variabel einsetzbares Distanzstück 23 gezeigt, welches zum Ausrichten von mehrteiligen Schalterdosen 17 an der Längsstrebe 4 eingesetzt und mittels einer Kugelraste 24 mit dieser verrastet werden kann. Das variabel einsetzbare Distanzstück 23 hindert die längeren Dosen daran sich zur Längsstrebe hin zu verbiegen und sorgt so für eine größere Formstabilität und ermöglicht ein korrektes Positionieren der Dosen. Je nach Anordnung der Dosen am Dosensetzer, z. B. Anordnung der Fixierungsvorrichtung 2 in der ersten Dose, dienen die Verschiebe- und Verrastelemente 9 als Planauflagefläche für die zu setzenden Dosen. Gegebenenfalls können die Verschiebe- und Verrastelemente einen Anschlag aufweisen, der das Verformen der Dosen beim Spannen der Fixierungsvorrichtung 2 verhindert.

Am Übergang zwischen Längsstrebe 4 und Querstrebe 5 sind Libellen 16 angebracht, welche die horizontale und vertikale Ausrichtung der Schalterdose 17 in der Wand erlauben. In der hier gezeigten Ausführungsform sind die Abstandhalter 3 in Form eines fünfstrahligen Sterns ausgebildet und an den Enden der Querstreben 5 drehbar montiert. Durch das Drehen der Abstandhalter 3 können Putzstärken von 0 bis 25 mm für das Setzen der Dosen berücksichtigt werden.

In der in Fig. 2 gezeigten Seitenansicht des Dosensetzers sind die Abstandsstücke 3 auf eine Putzstärke von 0 mm eingestellt. Nachdem die Dosenhalterung 6 sowie die mittels der Feder 19 vorgespannte Dosenhalterung 7 innerhalb der Schalterdose 17 eingreifen, kann der Dosensetzer ohne Probleme bis unmittelbar an eine bereits verputzte Wand herangeführt werden, wie das z.B. beim nachträglichen Einbau von Schalterdosen bei Altbausanierungen erforderlich sein kann.

Fig. 3 zeigt eine alternative Ausführungsform des Dosensetzers, die geeignet ist sowohl schmale als auch breitere Dosen bzw. wie hier gezeigt Abzweigkästen 18 zu setzen. Zu diesem Zweck sind an einer Querstrebe 5 Verschiebe- und Verrastelemente 9 vorgesehen, die mittels Fixierelementen 14, hier Stifte, in dafür vorgesehene Ausnehmungen 25 von breiteren Abzweigkästen 18 eingreifen können. Die Verschiebe- und Verrastelemente 9 an der Querstrebe 5 sind dabei ebenso mittels Rastvertiefungen 10 an dieser verrastbar.
Beim Einbau von schmalen Dosen können die Verschiebe- und Verrastelemente 9 an der Querstrebe 5 zur Mitte hin verschoben und verrastet werden, wobei dann die Fixierungselemente 14, in diesem Fall die Stifte, zwischen der fixierten Dose und der für die Dose vorgesehenen Wandausnehmung zum Liegen kommen, wodurch auch in diesem Fall Putzstärken von 0 mm problemlos berücksichtigt werden können.

Vorteilhafterweise sind die Abstandhalter 3 ebenfalls an den Verschiebe- und Verrastelemente 9 an der Querstrebe 5 drehbar montiert. Dies ermöglicht es, den Dosensetzer auch bei geringem Platzangebot, z.B. beim Setzen von Schalterdosen in der Nähe von Türrahmen, anzuwenden.

Die Verschiebe- und Verrastelemente 9 an der Querstrebe 5 sowie an der Längsstrebe 4 sowie auch das Hebellagerelement 12 bestehen in dieser Ausführungsform aus dem gleichen Bauteil, in diesem Fall aus einem Spritzgusselement. Dies hat den Vorteil, dass die Herstellungskosten für den Dosensetzer gering gehalten werden.

In Fig. 4 ist eine weitere mögliche Ausführungsform des Dosensetzers gezeigt. Als Abstandshalter 3 werden Federklemmen 20 verwendet, in welchen Stifte 21 zum Einstellen der Abstände verschiebbar gelagert sind. Die einzelnen Abstände lassen sich durch Rastnuten 22 an den Stiften 21 fixieren.

Die in den Fig. 5 und 6 gezeigte Ausführungsform des Abstandshalters 3 besitzt an den jeweiligen Enden Ausnehmungen 28 zur Aufnahme weiterer abnehmbarer Abstandstücke 27. Der Abstandhalter 3 ist an einem Verrastteil 26 drehbar montiert, wo die einzelnen Abstände mittels Rastnuten 22 am Verrastteil 26 einstellbar sind.

Das in den Fig. 7 und 8 gezeigte abnehmbare Abstandstück 27 kann zum Beispiel ein Spritzgussteil sein, welches Führungsaufnahmen 31 sowie eine Raste 29 aufweist. Wie in Fig. 5 und 6 gezeigt wird das abnehmbare Distanzstück 27 über Führungen 30 in die Ausnehmungen 28 des Abstandhalters 3 geschoben und mittels der Raste 29 an diesem fixiert. Durch den Einsatz dieser Abstandstücke 27 werden die Möglichkeiten unterschiedliche Abstände einzustellen wesentlich erhöht, z. B. weist das Abstandstück 27 wie gezeigt zu beiden Seiten unterschiedliche Abstände auf, und kann so in zwei Orientierungen in die Führungen 30 eingeschoben werden, wodurch drei verschiedene Abstände feinregulierbar sind, nämlich kein Abstandstück 27, die eine Seite mit dem ersten Abstand nach außen oder die zweite Seite mit dem zweiten Abstand nach außen.

Die in Fig. 9 gezeigte Ausführungsform zeigt einen Dosensetzer mit einem zweiteiligen ineinanderschiebbaren Rahmen aus zwei T-Teilen. Der Griff 15, mit dem Hebel 11 an dem die verschiebbare Dosenhalterung 7 angeordnet ist, das an der Längsstrebe 4 verschiebbare Verschiebe- und Verrastelement 9 sowie die hintere Querstrebe 5 bilden das erste T-Stück. Das zweite T-Stück wird aus der vorderen Querstrebe 5, der Längsstrebe 4 und der fest montierten Dosenhalterung 6 gebildet und ist in das erste T-Stück einschiebbar. Besonderer Vorteil dieser Ausführungsform ist die einfache Zerlegbarkeit des Rahmens für die Reinigung und den Transport sowie die Möglichkeit unterschiedliche Ausführungen des vorderen T-Stücks zu verwenden. Zum Beispiel können T-Stücke mit verschieden langen Querstreben 5 oder Querstreben 5 mit oder ohne seitlichen Verschiebe- und Verrastelementen 9 zusammen mit dem gleichen hinteren T-Stück verwendet werden.

Abstandhalter gemäß den Figuren 5 oder 6 sind bei der gezeigten Ausführungsform an den Enden der Querstreben 5 montiert. An den seitlichen Verschiebe- und Verrastelementen 9 sind Zentrierkegel 32 angeordnet. Die verschiebbare Dosenhalterung 7 ist abnehmbar ausgebildet und kann je nach Dosenart ausgetauscht und am Dosensetzer aufgesteckt werden.

Die in Fig. 9 gezeigten mehrteiligen Dosen 17 sind bei dieser Ausführungsform parallel zur Querstrebe 5 angeordnet und werden mittels der Zentrierkegel 32 und den beiden Dosenhalterungen 6, 7 festgehalten. Dies ermöglicht es die Dosen vertikal nahe eines Türrahmens oder in einer Ecke zu setzen, da so die Querstreben beim Setzen parallel zum Türrahmen verlaufen.

Fig. 10 zeigt die Ausführungsform gemäß Fig. 9 jedoch mit daran angeordnetem Abzweigkasten 18 und entsprechend breiterer, aufgesteckter, verschiebbarer Dosenhalterung 7. Der gezeigte Abzweigkasten wird durch die beiden Zentrierkegel 32 sowie die Dosenhalterungen 6, 7 sicher festgehalten, wobei die breitere, verschiebbare Dosenhalterung 7 ein Durchbiegen des Abzweigkastens in der Mitte aufgrund der günstigeren Kräfteverteilung verhindert.

## Patentansprüche

1. Dosensetzer zur Halterung von Dosen, wie Schalterdosen, Abzweigdosen, Abzweigkästen oder dergleichen während des Setzens und/oder Befestigens der Dosen in einer Wand umfassend einen vorzugsweise H-förmigen Rahmen mit einer Längsstrebe und zwei Querstreben, an welchem die Dosen über eine Fixiervorrichtung fixierbar sind, sowie am Rahmen angeordnete auf unterschiedliche Längen einstellbare Abstandshalter, **dadurch gekennzeichnet, dass** die Fixiervorrichtung (2) eine fest an der Längsstrebe (4) montierte Dosenhalterung (6) und eine entlang der Längsstrebe (4) verschiebbare Dosenhalterung (7) umfasst, wodurch die Fixiervorrichtung (2) an unterschiedliche Größen, von ein- oder mehrteiligen Dosen (17, 18) anpassbar ist.

2. Dosensetzer nach Anspruch 1, **dadurch gekennzeichnet, dass** entlang einer der Querstreben (5) Fixierungselemente (14) vorgesehen sind, welche eine bessere Fixierung von breiteren Dosen (18) erlauben, wobei mindestens ein Fixierungselement (14) auf der Querstrebe (5) verschiebbar ist.

3. Dosensetzer nach Anspruch 2, **dadurch gekennzeichnet, dass** die Fixierungselemente (14) Stifte für den Eingriff in entsprechende Ausnehmungen (25) in breiten Dosen (18) aufweisen, die beim Setzen von schmalen Dosen (17) im Raum zwischen denselben und der Wandöffnung aufgenommen werden, oder das die Fixierungselemente (14) Zentrierkegel (32) für den Eingriff innerhalb der Dosen (18) aufweisen, die zum Setzen von schmalen Dosen (17) abnehmbar ausgebildet sind.

4. Dosensetzer nach einem der Ansprüche 2 oder 3, **dadurch gekennzeichnet, dass** jedes verschiebbare Fixierungselement (14) an der Querstrebe (5) mindestens ein Verschiebe- und Verrastelement (9) beinhaltet, welches mit an der Querstrebe (5) angeordneten Rastvertiefungen (10) verrastbar ist, wobei Rastvertiefungen (10) für das Einspannen aller gängigen Größen von Dosen (17) und Dosenkombinationen vorgesehen sind.

5. Dosensetzer nach Anspruch 4, **dadurch gekennzeichnet, dass** die einstellbaren Abstandhalter (3) an den Enden der Querstreben (5) oder an den Verschiebe- und Verrastelementen (9) auf der Querstrebe (5), die dieselben trägt, angeordnet sind, wobei sie bei Anordnung an den Verschiebe- und Verrastelementen (9) mit diesen verschiebbar sind.

6. Dosensetzer nach einem der vorhergehenden Ansprüche, **dadurch gekennzeichnet, dass** der Rahmen (1) asymmetrisch ausgebildet ist, indem mindestens eine Querstrebe (5) sich asymmetrisch zur Längsstrebe in Form eines kurzen und eines langen Schenkels erstreckt.

7. Dosensetzer nach einem der Ansprüche 2 bis 5 und 6, **dadurch gekennzeichnet, dass** an dem kurzen Schenkeln der Querstrebe (5) der Abstandhalter (3) und das Fixierungselement (14) fest angeordnet sind und an dem langen Schenkel der Querstreben (5) der Abstandhalter (3) und das Fixierungselemente (14) an dem Verschiebe- und Verrastelement (9) montiert und mit diesem verschiebbar sind.

8. Dosensetzer nach einem der Ansprüche 1 bis 7, **dadurch gekennzeichnet, dass** die verschiebbare Dosenhalterung (7) zumindest ein Verschiebe- und Verrastelement (9) beinhaltet, welches mit an der Längsstrebe (4) angeordneten Rastvertiefungen (10) verrastbar ist, wobei Rastvertiefungen (10) für das Einspannen aller gängigen Größen von Dosen (17, 18) und Dosenkombinationen vorgesehen sind.

9. Dosensetzer nach einem der Ansprüche 1 bis 8, **dadurch gekennzeichnet, dass** die verschiebbare Dosenhalterung (7) abnehmbar ausgebildet ist und am Dosensetzer verrastbar ist, wobei Dosenhalterungen (7) für verschiedene Ausführungen von Dosen (17, 18) vorhanden sind und wechselweise am Dosensetzer aufsteckbar sind.

10. Dosensetzer nach einem der Ansprüche 1 bis 9, **dadurch gekennzeichnet, dass** die fest an der Längsstrebe (4) montierte und/oder die entlang der Längsstrebe (4) verschiebbare Dosenhalterung (6,7) mittels eines mit einer Feder (19) vorgespannten Hebels (11), welcher an einem Hebellagerelement (12) angeordnet ist, bewegbar ist, wodurch sie fest in der zu montierenden Dose (17, 18) einspannbar ist.

11. Dosensetzer nach einem der Ansprüche 1 bis 10, **dadurch gekennzeichnet, dass** zwischen der fest montierten (6) und der verschiebbaren Dosenhalterung (7) ein variabel einsetzbares vorzugsweise mittels einer Kugelraste (24) an der Längsstrebe verrastbares Distanzstück (23) für den Einbau von mehrteiligen Dosen (17, 18) vorgesehen ist.

12. Dosensetzer nach einem der Ansprüche 1 bis 11, **dadurch gekennzeichnet, dass** eine oder beide Dosenhalterungen (6,7) mit Kontaktflächen (13) ausgestattet sind, welche aus Gummi oder einem anderen Material mit hohem Reibungskoeffizienten bestehen.

13. Dosensetzer nach einem der Ansprüche 1 bis 12, **dadurch gekennzeichnet, dass** die Abstandshalter (3) kreuz- oder sternförmig ausgebildet sind und Rastnuten (22) aufweisen, wobei die Abstandshalter (3) an einem Verrastteil (26) drehbar gelagert und mit diesem verrastbar sind.

14. Dosensetzer nach Anspruch 13, **dadurch gekennzeichnet, dass** die kreuz- oder sternförmigen Abstandshalter (3) Ausnehmungen (28) aufweisen, in welchen abnehmbare Abstandstücke (27) unterschiedlicher Länge einschiebbar und vorzugsweise mittels einer Raste (29) fixierbar sind, oder dass vorzugsweise ein oder mehrere Abstandshalter (3) Einstellschrauben zur Feineinstellung der Abstände aufweisen.

15. Dosensetzer nach einem der Ansprüche 1 bis 12, **dadurch gekennzeichnet, dass** die Abstandshalter (3) aus einer Federklemme (20) mit darin verschiebbarem Stift (21) aufgebaut sind, wobei der Stift (21) vorzugsweise Rastnuten (22) zum verrastbaren Einstellen der Abstandshalter (3) aufweist.

16. Dosensetzer nach einem der Ansprüche 1 bis 12, **dadurch gekennzeichnet, dass** die Abstandshalter (3) aus einem Gewinde und zugehöriger Einstellschraube aufgebaut sind.

17. Dosensetzer nach einem der Ansprüche 9 bis 16, **dadurch gekennzeichnet, dass** die Verschiebe- und Verrastelemente (9) an der Querstrebe (5) und an der Längsstrebe (4) sowie das Hebellagerelement (12) der Dosenhalterung (6,7) aus prinzipiell dem gleichen Bauteil aufgebaut sind.

18. Dosensetzer nach einem der Ansprüche 1 bis 17, **dadurch gekennzeichnet, dass** der Rahmen (1) zur besseren Reinigung zerlegbar ausgebildet ist.

19. Dosensetzer nach Anspruch 18, **dadurch gekennzeichnet, dass** der Rahmen (1) aus zwei ineinanderschiebbaren T-Teilen aufgebaut ist, wobei der Griff (15) mit dem Hebel (11), der verschiebbaren Dosenhalterung (7) und einer Querstrebe (5) einen Teil bilden und die Längsstrebe (4), die zweite Querstrebe (5) und die feste Dosenhalterung (6) den zweiten in den ersten einschiebbaren T-Teil bilden.
